# EUROPÄISCHE PATENTANMELDUNG

(11) **EP 0 627 867 A1**
(43) Veröffentlichungstag der Anmeldung: **07.12.1994**
(21) Anmeldenummer: 94810083.9
(22) Anmeldetag: 15.02.1994
(51) Int. Cl.: H04R 1/02, B60R 11/02

(54) **Kleinlautsprecher**

(30) Priorität: 24.03.1993 CH 898/93
(71) Anmelder: Peiker, Andreas, D-61381 Friedrichsdorf/Ts (DE)
(72) Erfinder: Peiker, Andreas, D-61381 Friedrichsdorf/Ts (DE)
(74) Vertreter: Roshardt, Werner Alfred, Dipl.-Phys.

(57) **Zusammenfassung**

Ein Kleinlautsprecher (1), der im wesentlichen quaderförmig ist und eine schallabstrahlende Vorderseite hat, weist an seiner Vorderseite und seiner zur Vorderseite parallelen Rückseite (2) Vertiefungen (9.1, 9.2) auf. Sie sind für den Eingriff entsprechender an einem Klemmhalter ausgebildeter vorspringender Teile bestimmt. Als Vertiefungen sind auf Vorder- bezw. Rückseite (2) jeweils insbesondere senkrecht zueinander stehende Rillen (9.1, 9.2) vorgesehen, so dass der Kleinlautsprecher (1) im Klemmhalter in zwei zueinander senkrecht stehenden Stellungen festklemmbar ist. Vorzugsweise ist ferner an seiner Rückseite (2) eine insbesondere winkelförmige Ausnehmung (6) zum zumindest teilweise versenkten Anbringen eines Schwenkhalters in wahlweise zwei zueinander senkrechten Schwenkrichtungen vorgesehen.

## Beschreibung

### Technisches Gebiet

Die Erfindung betrifft einen Kleinlautsprecher, der im wesentlichen quaderförmig ist und eine schallabstrahlende Vorderseite hat.

### Stand der Technik

Kleinlautsprecher dienen vorzugsweise zur Uebertragung von Sprache. Sie werden z.B. an Telefonanlagen oder Funktelefone (z.B. Taxi-Funk) angeschlossen und ermöglichen zusammen mit einem Freisprechmikrofon das handfreie Telefonieren.

Für den Anwender ist es wichtig, dass er den Kleinlautsprecher ohne Schwierigkeiten dort befestigen kann, wo er am meisten dient. Aufgrund der unterschiedlichen Einsatzgebiete ist eine multifunktionale und einfach bedienbare Lautsprecherhalterung erwünscht.

### Darstellung der Erfindung

Aufgabe der Erfindung ist es nun, einen Kleinlautsprecher der eingangs genannten Art anzugeben, der sich mit geringem Aufwand entsprechend den jeweiligen unterschiedlichen Erfordernissen montieren lässt.

Gemäss der Erfindung besteht die Lösung darin, dass der Kleinlautsprecher am Rand der Vorderseite und auf seiner zur Vorderseite parallelen Rückseite Vertiefungen aufweist für den Eingriff entsprechend an einem Klemmhalter ausgebildeter vorspringender Teile.

Der Klemmhalter wird gemäss der Erfindung zunächst am gewünschten Ort befestigt, worauf der Kleinlautsprecher nur noch eingesteckt resp. eingeklemmt zu werden braucht.

Gemäss einer besonders bevorzugten Ausführungsform sind die Vertiefungen so angeordnet, dass der Kleinlautsprecher in zwei verschiedenen, zueinander senkrechten Stellungen im Klemmhalter befestigbar ist. In der einen Stellung wird der Kleinlautsprecher mit seiner Schmalseite und in der anderen mit seiner Längsseite in den Klemmhalter gedrückt.

Die Vertiefungen können als Rillen ausgestaltet sein. Sie werden vorzugsweise in die ästhetische Gesamterscheinung integriert. Anstelle von länglichen Rillen können natürlich auch einzelne Dellen vorgesehen sein.

Gemäss einer besonders bevorzugten Ausführungsform weist der Kleinlautsprecher an einer Ecke seiner Rückseite eine vorzugsweise winkelförmige Ausnehmung auf zum zumindest teilweise versenkten Anbringen eines Schwenkhalters in zwei zueinander senkrechten Stellungen. Grundsätzlich können die Massnahmen zur Befestigung eines Schwenkhalters unabhängig von einer Klemmhalterung vorgesehen sein. Vorzugsweise weist der Kleinlautsprecher aber beide Befestigungsmöglichkeiten auf. Der Benutzer kann dann wählen, in welcher Art er seinen Kleinlautsprecher montieren will.

An den Stirnseiten der winkelförmigen Ausnehmung, welche je senkrecht zueinander und zur Rückseite stehen, sind mit Vorteil die Mittel zum Befestigen des Schwenkhalters vorgesehen. Die Schwenkachsen werden dann im wesentlichen durch die beiden Achsen der winkelförmigen Ausnehmung gebildet.

Damit eine Schraube möglichst platzsparend und ästhetisch in der Ausnehmung versenkt werden kann, ist letztere zumindest teilweise viertelzylindrisch ausgebildet.

Ein Klemmhalter für einen erfindungsgemässen Kleinlautsprecher ist im wesentlichen ein C-bzw. U-förmiges Profilstück, das an seinen Profillängsseiten gegen die Profilinnenseite vorspringende Teile für den Eingriff in die entsprechend ausgebildeten Vertiefungen an der Vorderseite und Rückseite des Kleinlautsprechers aufweist.

Gemäss einer besonders bevorzugten Ausführungsform ist das Profilstück asymetrisch, insbesondere nahezu L-förmig ausgebildet. Es greift auf der Vorderseite am Rand an und erstreckt sich - angeschmiegt an die Seite des Kleinlautsprechers - bis an die Rückseite.

Das Profilstück kann zum Befestigen desselben an einem gewünschten Ort Bohrungen aufweisen. Es sind aber auch andere Befestigungsarten denkbar (Klippbefestigung, Steckverbindung etc. mit einem geeignet ausgebildeten Sockel).

Vorzugsweise ist die kürzere der Profilseiten trapezförmig gestaltet, indem das nahezu L-förmige Profil an einer seiner Stirnseiten geeignet abgeschrägt ist.

Das Profilstück sollte nicht länger sein, als der Kleinlautsprecher breit ist. Dies hat vorallem Vorteile in ästhetischer Hinsicht.

Ein Schwenkhalter für einen erfindungsgemässen Kleinlautsprecher zeichnet sich dadurch aus, dass er eine Schwenkachse und eine im Abstand zur Schwenkachse und parallel zu dieser angeordnete Befestigungszunge aufweist.

Gemäss einer besonders bevorzugten Ausführungsform ist er als Kunststoff-Formteil mit einer unverlierbaren Schraube als Schwenkachse ausgebildet. Ein solcher Schwenkhalter ist sehr einfach und preiswert herstellbar.

An die Stelle einer Schraubenbindung kann z. B. auch ein Bajonett-Verschluss o. dgl. treten.

Aus der Detailbeschreibung und der Gesamtheit der Patentansprüche ergeben sich weitere vorteilhafte Merkmale und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: einen erfindungsgemässen Kleinlautsprecher in perspektivischer Darstellung von hinten;
- Fig. 2: einen erfindungsgemässen Schwenkhalter in perspektivischer Darstellung;
- Fig. 3: einen erfindungsgemässen Klemmhalter in perspektivischer Darstellung;
- Fig. 4a,b: ein im Hochformat am Schwenkhalter befestigter Kleinlautsprecher von vorne und von der Seite betrachtet;
- Fig. 5a,b: einen im Querformat am Schwenkhalter befestigten Kleinlautsprecher von der Seite und von vorn betrachtet;
- Fig. 6a,b: einen im Querformat im Klemmhalter befestigten Kleinlautsprecher von vorn und von der Seite betrachtet;
- Fig. 7: einen im Hochformat im Klemmhalter befestigte Kleinlautsprecher.

Grundsätzlich sind in den Zeichnungen gleiche Teile mit gleichen Bezugszeichen versehen.

### Wege zur Ausführung der Erfindung

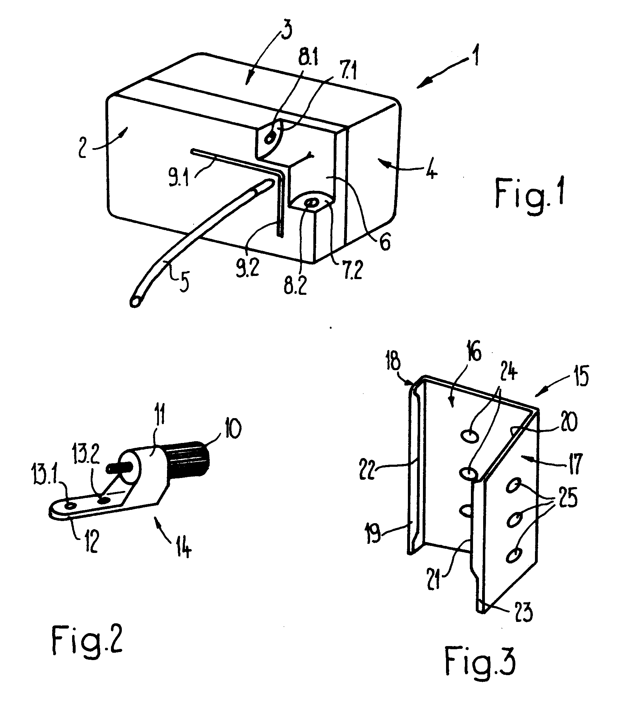

Fig. 1 zeigt einen erfindungsgemässen quaderförmigen Kleinlautsprecher 1. Er weist eine (in der Darstellung gem. Fig. 1 nicht sichtbare) schallabstrahlende Vorderseite und parallel dazu eine Rückseite 2 auf. In Fig. 1 ist ferner eine Längsseite 3 und eine Schmalseite 4 des Kleinlautsprechers zu sehen. Ein Kabel 5 mündet in die Rückseite 2.

In der durch die Rückseite 2, die Längsseite 3 und die Schmalseite 4 gebildeten Ecke ist eine Ausnehmung 6 vorgesehen. Sie ist vorzugsweise winkelförmig und weist zwei zueinander und zur Rückseite senkrecht stehende Stirnseiten 7.1, 7.2 auf. Diese weisen je eine Gewindebohrung 8.1, 8.2 zum Festschrauben eines Schwenkhalters auf. Im übrigen ist die Ausnehmung zumindest teilweise viertelzylindrisch geformt.

Im Prinzip kann die Ausnehmung auch rechteckig resp. quaderähnlich sein. Die Winkelform lässt allerdings mehr Gehäuseinnenraum zu und ist ferner ästhetisch ansprechender.

Zur Befestigung in einem Klemmhalter sind auf der Rückseite zwei Rillen 9.1, 9.2 vorgesehen. Sie haben einen gewissen Abstand zum Rand der Rückseite und erstrecken sich - was insbesondere für die Rille 9.1 zutrifft - nicht über die ganze Länge resp. Breite der Rückseite 2.

Im vorliegenden Ausführungsbeispiel laufen die beiden Rillen 9.1, 9.2 in der Nähe des Winkels der Ausnehmung 6 zusammen.

Die Rillen 9.1, 9.2 verlaufen parallel zur Längsseite 3 resp. Schmalseite 4. Sie korrespondieren richtungsmässig mit (in Fig. 1 nicht dargestellten) Rillen auf der Vorderseite des Kleinlautsprechers 1.

Fig. 2 zeigt einen Schwenkhalter 14. Dieser ist gemäss einer besonders bevorzugten Ausführungsform als Kunststoffspitzgussstück umfassend einen Schraubenhalter 11 und eine Befestigungszunge 12 ausgebildet. Der Schraubenhalter 11 weist eine Bohrung für eine Schraube 10 auf, mit welcher der Schwenkhalter 14 am Kleinlautsprecher 1 festgeschraubt wird. Die Befestigungszunge 12 ist parallel zur Achse der Schraube 10 (und zwar in einem bestimmten Abstand zur letztgenannten) angeordnet. Sie ragt über das mit dem Gewinde versehene Ende der Schraube 10 hinaus. Ferner weist sie z.B. zwei Bohrungen 13.1, 13.2 auf, mit welcher der Schwenkhalter auf einer Unterlage, einem Sockel etc. festgeschraubt werden kann.

Die Schraube 10 wird mit ihrem Gewinde wahlweise in die Gewindebohrung 8.1 oder 8.2 eingeschraubt. Die Zunge 12 kann bezüglich des Kleinlautsprechers 1 jeweils unterschiedliche Schwenklagen einnehmen. Durch Anziehen der Schraube 10 wird sie in der jeweiligen Stellung fixiert.

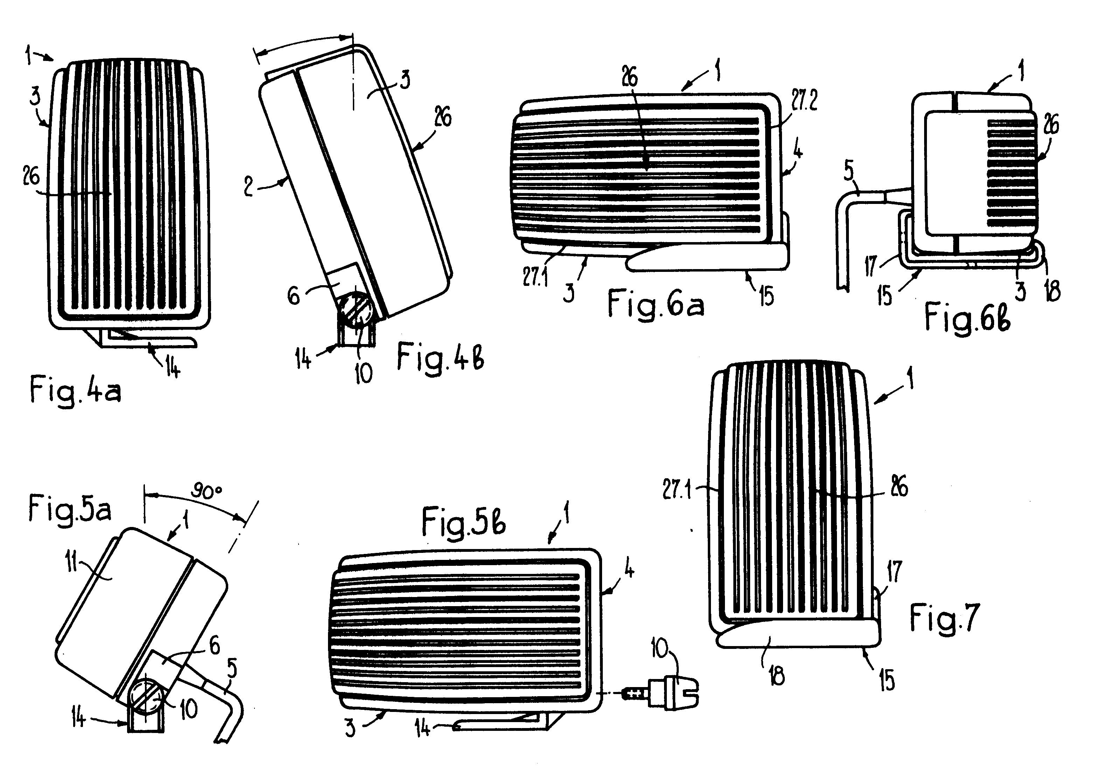

Aus den Fig. 4a,b und 5a,b sind die verschiedenen Befestigungsmöglichkeiten zu entnehmen. Bei Fig. 4a,b ist der Schwenkhalter 14 in der Gewindebohrung 8.2 fixiert. Der Kleinlautsprecher kann infolge dessen um die durch die Rückseite 2 und die Schmalseite 4 gebildete Kante um max. 90 Grad verschwenkt werden.

In Fig. 4a ist die in bekannter Art mit Schlitzen versehene schallabstrahlende Vorderseite 26 des Kleinlautsprechers gezeigt. Wird der Schwenkhalter 14 auf einer horizontalen Unterlage befestigt, dann ist der Kleinlautsprecher im Hochformat montiert.

In Fig. 5 a,b ist der Schwenkhalter 14 in der Gewindebohrung 8.1 festgeschraubt. Der Kleinlautsprecher 1 kann damit bezügl. der zwischen Rückseite 2 und Längsseite 3 gebildeten Kante geschwenkt werden. Unter der Voraussetzung dass der Schwenkhalter auf einer horizontalen Unterlage befestigt wird, ist der Kleinlautsprecher im Querformat montiert.

Es versteht sich, dass der Schwenkhalter auch an einer vertikalen oder beliebig geneigten Fläche befestigt werden kann.

Fig. 3 zeigt einen erfindungsgemässen Klemmhalter 15. Es handelt sich um ein asymmetrisch C-förmiges resp. nahezu L-förmiges Profilstück. Es weist eine grosse plattenförmige Profilseite 16 und zwei längsseitig und im rechten Winkel dazu stehende Profilseiten 17, 18 auf. Die Profilseite 17 ist dabei breiter als die Profilseite 18, welche im vorliegenden Beispiel nur als dünner Streifen gestaltet ist. Die Profilseite 17 ist an einer ihrer Schmalseiten 20 schräg geschnitten und nimmt deshalb eine trapezförmige Gestalt an.

An ihren der Profilseite 16 abgewandten Längsseiten 23, 19 weisen die Profilseiten 17, 18 gegen die Profilinnenseite gerichtete Rippen resp. Vorsprünge 21, 22 auf. Diese sind zum Eingriff in die am Kleinlautsprecher in entsprechender Weise ausgebildeten Rillen bestimmt.

Gemäss dem vorliegenden Ausführungsbeispiel erstrecken sich die rippenartigen Vorsprünge 21, 22 nicht über die gesamte Längsseite der entsprechenden Profilseiten 18, 17 hinweg. Dies ist insbesondere und ausgeprägter für den Vorsprung 21 der Fall, welcher in die auf der Rückseite 2 des Kleinlautsprechers 1 ausgebildeten Rillen 9.1 resp. 9.2 greifen soll.

Um den Klemmhalter 15 auf einem Sockel, an einer Wand o. dgl. befestigen zu können, sind in den Profilseiten 16 und 17 mehrere Bohrungen 24 resp. 25 vorgesehen.

In den Fig. 6 a,b ist eine erste von zwei wählbaren Befestigungsarten gezeigt. In Fig. 6 a ist die Vorderseite 26 von vorne gezeigt. Sie weist entlang ihres Randes zumindest zwei Rillen 27.1, 27.2 auf. In die eine Rille 27.1 greift der Vorsprung 22 ein. In die entsprechende auf der Rückseite 2 vorgesehene Rille 9.1 greift der Vorsprung 21 ein. Der Kleinlautsprecher 1 wird also klemmend an Vorder- und Rückseite 26 resp. 2 gehalten, wobei die Profilseite 16 an der Längsseite 3 des Kleinlautsprechers 1 anliegt. Dies ist insbesondere aus Fig. 6 b erkennbar.

In Fig. 7 ist die Befestigung im Hochformat gezeigt. Der Vorsprung 22 greift in die Rille 27.2 und der Vorsprung 21 in die Rille 9.2 ein. Die Profilseite 16 liegt in diesem Fall an der Schmalseite 4 an. Aus Fig. 7 erschliesst sich auch der ästhetische Vorteil, der sich daraus ergibt, dass der Klemmhalter 15 nicht länger ist als der Kleinlautsprecher 1 breit. Für eine stabile Halterung ist er vorzugsweise etwa gleich lang wie der Kleinlautsprecher breit ist.

Die Erfindung beschränkt sich natürlich nicht auf die beschriebenen Ausführungsbeispiele. Insbesondere ist es nicht zwingend, dass der Lautsprecher sowohl Klemm- als auch Schwenkhalterungen zulässt.

Klemm- und Schwenkhalter sind vorzugsweise aus Kunststoff gefertigt und werden zusammen mit dem (ein Kunststoffgehäuse aufweisenden) Kleinlautsprecher vertrieben.

Zusammenfassend ist festzuhalten, dass durch die Erfindung eine einfache und multivariable Befestigungsart für einen Kleinlautsprecher geschaffen worden ist.

## Patentansprüche

1. Kleinlautsprecher (1), der im wesentlichen quaderförmig ist und eine schallabstrahlende Vorderseite (26) hat, dadurch gekennzeichnet, dass er am Rand der Vorderseite (26) und auf seiner zur Vorderseite (26) parallelen Rückseite (2) Vertiefungen (27.1, 27.2 resp. 9.1, 9.2) aufweist für den Eingriff entsprechender, an einem Klemmhalter (15) ausgebildeter vorspringender Teile (21, 22).

2. Kleinlautsprecher nach Anspruch 1, dadurch gekennzeichnet, dass die Vertiefungen (27.1, 27.2 resp. 9.1, 9.2) so angeordnet sind, dass der Kleinlautsprecher (1) in zwei verschiedenen, zueinander senkrechten Stellungen (Fig. 6a, Fig. 7a) im Klemmhalter (15) befestigbar ist.

3. Kleinlautsprecher nach Anspruch 1 oder 2, dadurch gekennzeichnet, dass die Vertiefungen (27.1, 27.2, 9.1, 9.2) Rillen sind.

4. Kleinlautsprecher insbesondere nach einem der Ansprüche 1 - 3, dadurch gekennzeichnet, dass er an einer Ecke seiner Rückseite (2) eine insbesondere winkelförmige Ausnehmung (6) zum zumindest teilweise versenkten Anbringen eines Schwenkhalters (14) in wahlweise zwei zu einander senkrechten Schwenkrichtungen aufweist.

5. Kleinlautsprecher nach Anspruch 4 dadurch gekennzeichnet, dass an Stirnseiten (7.1, 7.2) der winkelförmigen Ausnehmung (6), welche je senkrecht zueinander und zur Rückseite (2) sind, Mittel (8.1, 8.2) zum Befestigen des Schwenkhalters (14) vorgesehen sind.

6. Kleinlautsprecher nach Anspruch 4 oder 5, dadurch gekennzeichnet, dass die winkelförmige Ausnehmung (6) zumindest teilweise viertelzylindrisch ist.

7. Klemmhalter (15) für einen Kleinlautsprecher (1) nach einem der Ansprüche 1 - 3, dadurch gekennzeichnet, dass er ein C- bzw. U-förmiges Profilstück (16, 17, 18) ist, das an seinen Profillängsseiten (17, 18) gegen die Profilinnenseite vorspringende Teile (21, 22) für den Eingriff in den entsprechend ausgebildeten Vertiefungen (9.1, 9.2 resp. 27.1, 27.2) des Kleinlautsprechers (1) aufweist.

8. Klemmhalter nach Anspruch 7, dadurch gekennzeichnet, dass das Profilstück (16, 17, 18) asymmetrisch, insbesondere nahezu L-förmig ausgebildet ist.

9. Klemmhalter nach Anspruch 7 oder 8, dadurch gekennzeichnet, dass das Profilstück (16, 17, 18) Bohrungen (24, 25) zum Befestigen desselben an einem gewünschten Ort aufweist.

10. Klemmhalter nach Anspruch 8 oder 9, dadurch gekennzeichnet, dass die kürzere der Profilseiten (17, 18) trapezförmig ist, indem sie an einer Schmalseite (20) abgeschrägt ist.

11. Klemmhalter nach einem der Ansprüche 7 - 10, dadurch gekennzeichnet, dass das Profilstück (16, 17, 18) höchstens so lang wie der Kleinlautsprecher (1) breit (4) ist.

12. Schwenkhalter (14) für einen Kleinlautsprecher (1), nach einem der Ansprüche 4 - 6, dadurch gekennzeichnet, dass er eine Schwenkachse und eine im Abstand zur Schwenkachse (10) und parallel zu dieser angeordnete Befestigungszunge (12) aufweist.

13. Schwenkhalter nach Anspruch 12, dadurch gekennzeichnet, dass er als Kunststofformteil mit einer unverlierbaren Schraube (10) als Schwenkachse ausgebildet ist.
